# EUROPÄISCHE PATENTSCHRIFT

(11) **EP 1 817 762 B1**
(45) Veröffentlichungstag und Bekanntmachung des Hinweises auf die Patenterteilung: **20.01.2016**
(21) Anmeldenummer: 05818140.5
(22) Anmeldetag: 21.11.2005
(51) Int. Cl.: G09B 23/28

(54) **VORRICHTUNG ZUM PRÜFEN VON ANÄSTHESIE- UND BEATMUNGSGERÄTEN**
DEVICE FOR CHECKING ANESTHESIA AND VENTILATION UNITS
DISPOSITIF SERVANT A VERIFIER DES APPAREILS D'ANESTHESIE ET RESPIRATOIRES

(30) Priorität: 24.11.2004 CH 194004
(43) Veröffentlichungstag der Anmeldung: 15.08.2007
(73) Patentinhaber: Imt Medical AG, 9470 Buchs SG (CH)
(72) Erfinder: FRIBERG, Harri, 9493 Mauren (LI)
(74) Vertreter: Rosenich, Paul
(86) Internationale Anmeldenummer: PCT/IB2005/053834
(87) Internationale Veröffentlichungsnummer: WO 2006/056927

(56) Entgegenhaltungen:
- US-A- 3 562 924
- US-A- 4 984 987
- US-A- 4 996 980
- US-A- 5 286 206
- US-A- 5 580 255
- US-A1- 2004 058 305

## Beschreibung

Die Erfindung betrifft eine Vorrichtung zum Prüfen von Anästhesie- und Beatmungsgeräten, mit einem zwischen zwei relativ zueinander beweglichen Klappen angeordneten Lungenbeutel, mit einem Lungeneinlass und Einstellmitteln zum Verstellen der Simulations-Parameter.

Solche auch als "Lungensimulatoren" oder als "Testlunge" bezeichneten Geräte, bzw. Vorrischtungen werden dazu verwendet, um Beatmungsgeräte aller Art sowie auch Anästhesiegeräte vor dem Einsatz am Menschen auf einwandfreie Funktion zu überprüfen. Die Testlunge sollte wenn möglich verschiedene Lungentypen simulieren können. Die Eigenschaften einer Lunge werden durch die Parameter Resistance (Atemwegs-Widerstand), Compliance (Lungenhärte) und Leckage bestimmt.

Bei den bisher verwendeten Testlungen ist zu unterscheiden zwischen zwei voneinander wesentlich unterschiedlichen Arten:

Kostengünstige herkömmliche Testlungen sind meistens durch einen simplen Gummibeutel (bzw. Ballon) gebildet, welcher genau eine Resistance (AtemwegsWiderstand), eine Compliance (Lungenhärte) und keine Leckage aufweist. Somit ist eine Überprüfung eines Beatmungsgerätes oder Anästhesiegerätes mit solchen Testlungen nur ungenügend möglich, da es nicht möglich ist, dass verschiedene Lungentypen damit simuliert werden können. Dies führt häufig zu vermeintlichen Fehlfunktionen des zu testenden Gerätes (z.B. sog. Autotriggerung), obwohl das zu testende Gerät völlig in Ordnung ist.

Andererseits sind bspw. aus der DE-A 2 404 616 oder der DE-A 3 427 182 sehr aufwendige und teure Testlungen bekannt, welche z.B. mittels eines Faltenbalg- oder eines Zylinder-Kolben-Systems funktionieren. Bei solchen Testlungen wird die Einstellung der Resistance (d.h. des Atemwegs-Widerstandes) mittels verschiedenen Adaptern und die Einstellung der Compliance (d. h. Lungenhärte) mittels Federn oder mittels eines Zylinder-Kolben-Systems in feiner Abstufung erreicht. Durch den umfangreichen mechanischen Aufbau sind solche Testlungen sehr schwer, kompliziert zu bedienen, teuer und meistens nur mittels Fremdenergie zu betreiben.

Aus der US-A-5580255 ist eine Vorrichtung zum Prüfen von Anästhesie- und Beatmungsgeräten bekannt mit einem zwischen zwei relativ zueinander beweglichen Klappen angeordneten Lungenbeutel sowie mit einem Lungeneinlass und Einstellmitteln zum Verstellen der Simulations-Parameter, wobei wenigstens eine der beiden Klappen als federelastisch verformbarer Lappen ausgebildet ist.

Der Erfindung liegt somit die Aufgabe zugrunde, eine einfache kostengünstig herstellbare Testlunge zu schaffen, welche die angegebenen Nachteile vermeidet. Gemäss der Erfindung wird dies dadurch erreicht, dass die federnde Länge der Lappen durch Hilfsmittel verstellbar ist, wobei die Hilfsmittel als die freien Enden der Lappen miteinander verbindender, in Längsrichtung der Lappen verschieb- und feststellbarer Schieber ausgebildet sind.

Dadurch wird eine kompakte Bauform und ein geringes Gewicht des LungenSimulators erreicht und der Einsatz ohne zusätzliche Hilfsmittel direkt am Beatmungs-Schlauchsystem ermöglich.

Die federnde Länge der Lappen ist mittels Hilfsmitteln verstellbar. Dadurch kann einerseits die Federhärte der Lappen und andererseits auch das nutzbare Volumen des Lungenbeutels verändert werden. Je grösser die federnde Länge der Lappen ist, desto weicher werden ihre Federeigenschaften. Durch Verkürzung der federnden Länge werden die Lappen härter. Dies ermöglicht, dass mit der selben Testlunge unterschiedliche Anforderungen geprüft werden können.

Die Hilfsmittel sind als die freien Enden der Lappen miteinander verbindender, in Längsrichtung der Lappen verschieb- und feststellbarer Schieber ausgebildet. Der Schieber kann die Lappen von aussen umgreifen oder sie durchsetzen. Das Feststellen des Schiebers kann bspw. mittels einer lösbaren Klemmschraube erfolgen.

Eine zweckmässige Ausführung besteht darin, dass beide Klappen als federelastisch verformbare Lappen ausgebildet sind. Der Lungenbeutel ist somit symmetrisch zwischen den zwei verformbaren Lappen angeordnet. Dies ermöglicht ein gleichmässiges Sich-Ausdehnen und Zusammenziehen des Lungenbeutels.

Die Lappen sind vorteilhaft am einen Ende fest eingespannt und federelastisch verformbar. Die Lappen wirken somit nach der Art von Blattfedern. Durch Wahl der Breite und Materialstärke können die Federeigenschaften beeinflusst werden.

Für die Handhabung des Lungensimulators ist es zweckmässig, dass wenigstens einer der Lappen aus Kunststoff besteht. Lappen aus Kunststoff sind chemisch sehr beständig, körperfreundlich und dauerhaft.

Damit die Federeigenschaften der Lappen im Laufe des Betriebs über die gesamte Lebensdauer konstant bleiben, bestehen der, bzw. die Lappen vorteilhaft aus armiertem Faser-Verbund. Je nach Anforderungen kann die Armierung bspw. aus Glasfasern oder Polycarbonaten bestehen.

Eine weitere zweckmässige Ausführung besteht darin, dass wenigstens einer der Lappen aus Federstahl besteht. Federstahl ermöglicht eine geringe Wandstärke der Lappen und dadurch eine sehr kompakte Bauweise.

Für eine einfache Herstellung und Montage des Lungensimulators ist es vorteilhaft, das die beiden Lappen einstückig miteinander verbunden sind. Die beiden Lappen können vorzugsweise U-förmig miteinander verbunden sein.

Der Schieber ist zweckmässigerweise stufenweise verrastbar. Dadurch ist es möglich, eindeutig definierte und wiederholbare Prüf-Parameter zu bekommen. Ausserdem wird dadurch auch verhindert, dass die Parameter im Verlauf der Prüfung versehentlich verstellt werden können.

Der Lungenbeutel ist vorteilhaft flach ausgebildet und auswechselbar. Durch die flache Ausbildung passt sich der Lungenbeutel ideal dem Zwischenraum zwischen den beiden Lappen an. Die flache Form ermöglicht ausserdem ein relativ grosses Fassungsvolumen. Durch die Auswechselbarkeit des Lungenbeutels ist es möglich, mit derselben Testlunge Anforderungen mit unterschiedlichen Lungenvolumen zu prüfen.

Zweckmässigerweise sind die Lungenparameter "Resistance" (Atemwegs-Widerstand) und/oder "Compliance" (Lungenhärte) und /oder "Leckage" (Leckverluste) unabhängig voneinander in verschiedenen Stufen einstellbar. Durch die sehr einfache Einstellbarkeit des Atemwegs-Widerstandes, einstellbarer Lungenhärte und einstellbarer Leckverluste in verschiedenen Stufen können praktisch alle Lungentypen von Babys bis zu Erwachsenen ohne den Einsatz zusätzlicher Adapter simuliert werden.

Vorteilhaft ist eine stufenlose Leckage-Simulation vorgesehen. Dadurch kann durch Veränderung der Leckage-Simulation die in der Praxis sehr heikle Funktion der Patienten-Flusstriggerung und eine Beatmung mit Leckage auf einfache Weise überprüft werden.

Für die Überwachung des Verhaltens der Testlunge ist es zweckmässig, dass Durchfluss-, Druck- und/oder Volumen messungen in der Vorrichtung integriert sind und die Werte mittels Anzeigeeinheit an der Testlunge anzeigbar sind.

Weitere Ausbildungen der Erfindung sind in den abhängigen Patentansprüchen angegeben.

### Figurenbeschreibung

Die Erfindung wird nachstehend, anhand der sie beispielsweise Zeichnungen, näher erläutert.

Es zeigen dabei:
- Fig. 1: eine Draufsicht einer Testlunge,
- Fig. 2: eine Ansicht der in Fig. 1 dargestellten Testlunge, in Richtung des Pfeils A,
- Fig. 3: einen Querschnitt durch die in Fig. 2 dargestellte Testlunge, entlang der Linie III - III,
- Fig. 4: eine perspektivische Ansicht der in den Fig. 1 und 2 dargestellten Testlunge.

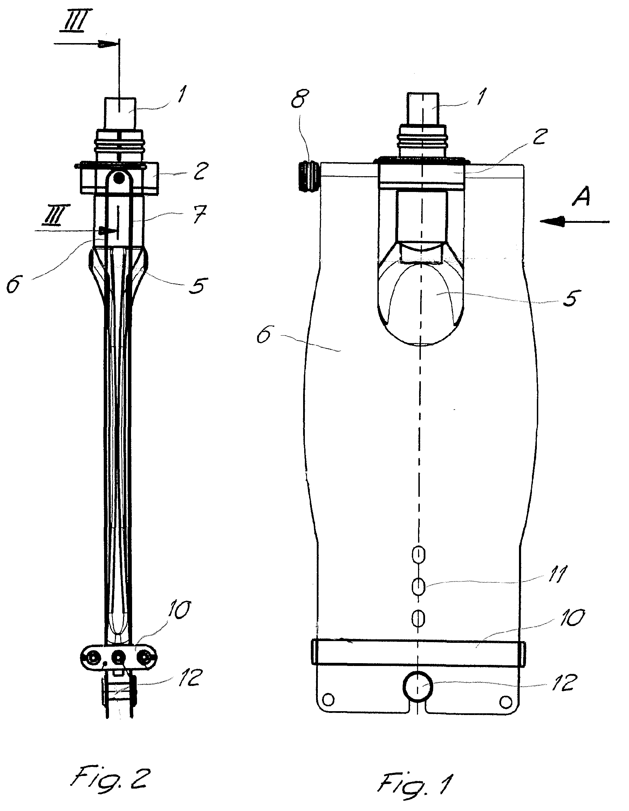

Die aus den Fig. 1 bis 4 ersichtliche Testlunge weist einen Einlassstutzen 1auf, der mit einem Gehäuse 2 um seine Längsachse drehbar verbunden ist. Der Einlassstutzen ist mit wenigstens einem Kanal 1a versehen, der mit Durchtrittsöffnungen 2a im Gehäuse 2 zur Deckung bringbar ist. Der Einlassstutzen 1 ist mittels einer-bspw.als Kugelraste oder als Klemmschraube ausgebildeten - Arretierung 3 in einergewünschten Drehstellung feststellbar. Dadurch kann ein gewünschter Durchlassquer schnitt eingestellt werden. Auf der gegenüberliegenden Seite des Einlassstutzens 1 befindet sich ein Anschlussstutzen 4. Ein ballonartiger, auswechselbarer Lungenbeutel 5 kann mit dem Anschlussstutzen verbunden werden. Der Lungenbeutel 5 ist zwischen zwei federelastisch ausgebildeten Lappen 6, 7 angeordnet. Die beiden Lappen 6, 7 sind vorzugsweise einstückig und U-förmig um das Gehäuse 2 herum miteinander verbunden. Zum Aufblasen des Lungenbeutels 5 müssen die Lappen 6, 7 auseinandergespreizt werden. Durch ihre federnden Eigenschaften setzen die Lappen 6, 7 dem Aufspreizen einen bestimmten definierten Widerstand entgegen.

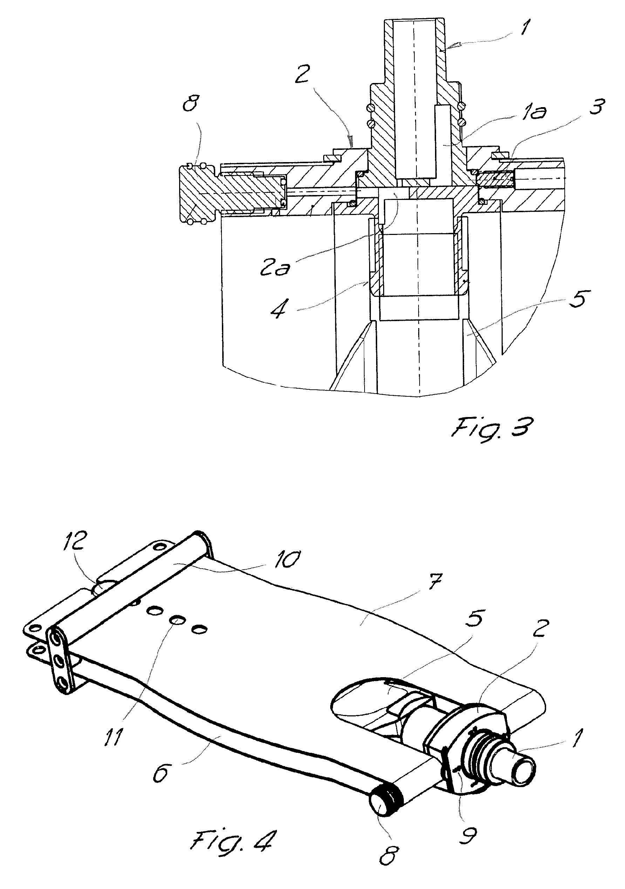

Seitlich am Gehäuse 2 ist ein Regulierventil 8 angeordnet. Das Regulierventil 8 dient dem Einstellen eines simulierten Leckage-Verlusts. In der in Fig. 3 dargestellten Stellung ist das Regulierventil 8 vollständig geschlossen und der Leckage-Verlust somit gleich Null. Durch Herausdrehen des Regulierventils 8 kann der Leckage-Verlust stufenlos eingestellt werden.

An der Stirnseite des Gehäuses 2 ist eine Skala 9 angebracht. Mit Hilfe dieser Skala 9 kann festgestellt werden, in welcher Drehstellung sich der Einlassstutzen 1 gerade befindet. Anhand der Skala können die Simulationsparameter stufenweise oder stetig verändert werden. Die eingestellten Werte sind jederzeit reproduzierbar.

Die freien Enden der Lappen 6, 7 sind über einen verstellbaren Schieber 10 miteinander verbunden. Durch Verschieben des Schiebers 10 können die Federeigenschaften der Lappen 6, 7 und somit die sog. Compliance, d.h. die Lungenhärte der Testlunge verstellt werden. Der Schieber 10 ist mittels in Rastöffnungen 11 in den Lappen 6, 7 eingreifenden Vorsprüngen oder Nocken stufenweise feststellbar. Du rch Verkürzen der freien Länge der Lappen 6, 7 wird deren Federsteifigkeit erhöht. Gleichzeitig wird auch das nutzbare Volumen des Lungenbeutels 5 verkleinert. An den freien Ende der Lappen 6, 7 ist ausserdem eine Feststellschraube 12 angeordnet welche zur Befestigung des dem Anschlussstutzen 4 gegenüberliegenden Endes des Lungenbeutels 5 an den Lappen 6, 7 dient.

### Bezugszeichenliste

- 1: Einlassstutzen
- 1a: Kanal
- 2: Gehäuse
- 2a: Durchtrittsöffnung
- 3: Arretierung
- 4: Anschlussstutzen
- 5: Lungenbeutel
- 6: Lappen
- 7: Lappen
- 8: Regulierventil
- 9: Skala
- 10: Schieber
- 11: Rastöffnung
- 12: Feststellschraube

## Patentansprüche

1. Vorrichtung zum Prüfen von Anästhesie- und Beatmungsgeräten, mit einem zwischen zwei relativ zueinander beweglichen Klappen angeordneten Lungenbeutel, mit einem Lungeneinlass und Einstellmitteln zum Verstellen der Simulations-Parameter, wobei wenigstens eine der beiden Klappen als federelastisch verformbarer Lappen ausgebildet ist, **dadurch gekennzeichnet, dass** die federnde Länge der Lappen (6, 7) durch Hilfsmittel verstellbar ist, wobei die Hilfsmittel als die freien Enden der Lappen (6, 7) miteinander verbindender, in Längsrichtung der Lappen (6, 7) verschieb- und feststellbarer Schieber (10) ausgebildet sind.

2. Vorrichtung nach Anspruch 1, **dadurch gekennzeichnet, dass** beide Klappen als federelastisch verformbare Lappen (6, 7) ausgebildet sind.

3. Vorrichtung nach Anspruch 1 oder 2, **dadurch gekennzeichnet, dass** die Lappen (6, 7) am einen Ende fest eingespannt sind.

4. Vorrichtung nach einem der Ansprüche 1 bis 3, **dadurch gekennzeichnet, dass** wenigstens einer der Lappen (6, 7) aus Kunststoff besteht.

5. Vorrichtung nach Anspruch 4, **dadurch gekennzeichnet, dass** der, bzw. die Lappen (6, 7) aus armiertem Faser-Verbund bestehen.

6. Vorrichtung nach einem der vorhergehenden Ansprüche, **dadurch gekennzeichnet, dass** wenigstens einer der Lappen (6, 7) aus Federstahl besteht.

7. Vorrichtung nach einem der vorhergehenden Ansprüche, **dadurch gekennzeichnet, dass** die Lappen (6, 7) einstückig miteinander verbunden sind.

8. Vorrichtung nach Anspruch 1, **dadurch gekennzeichnet, dass** der Schieber (10) stufenweise verrastbar ist.

9. Vorrichtung nach einem der vorhergehenden Ansprüche, **dadurch gekennzeichnet, dass** der Lungenbeutel (5) flach ausgebildet und auswechselbar ist.

10. Vorrichtung nach einem der vorhergehenden Ansprüche, **dadurch gekennzeichnet, dass** die Lungenparameter "Resistance" (Atemwegs-Widerstand) und/oder "Compliance" (Lungenhärte) und /oder "Leckage" (Leckverluste) unabhängig voneinander in verschiedenen Stufen einstellbar sind.

11. Vorrichtung nach einem der vorhergehenden Ansprüche, **dadurch gekennzeichnet, dass** eine stufenlose Leckage-Simulation vorgesehen ist.

12. Vorrichtung nach einem der vorhergehenden Ansprüche, **dadurch gekennzeichnet, dass** Durchfluss-, Druck- und/oder Volumenmessung in der Vorrichtung integriert sind und die Werte mittels Anzeigeeinheiten an der Testlunge anzeigbar sind.

## Claims

1. A device for checking anaesthesia and ventilation units, with a lung sac arranged between two flaps which are movable relative to one another, with a lung inlet and adjustment means for adjusting the simulation parameters, wherein at least one of the two flaps is constructed as an elastically deformable lobe, **characterized in that** the resilient length of the lobes (6, 7) is adjustable by aids, wherein the aids are constructed as a slide (10) connecting the free ends of the lobes (6, 7) to one another and displaceable and fixable in longitudinal direction of the lobes (6, 7).

2. The device according to Claim 1, **characterized in that** both flaps are constructed as elastically deformable lobes (6, 7).

3. The device according to Claim 1 or 2, **characterized in that** the lobes (6, 7) are clamped securely at the one end.

4. The device according to one of Claims 1 to 3, **characterized in that** at least one of the lobes (6, 7) consists of plastic.

5. The device according to Claim 4, **characterized in that** the lobe or respectively lobes (6, 7) consist of reinforced fibre composite.

6. The device according to one of the preceding claims, **characterized in that** at least one of the lobes (6, 7) consists of spring steel.

7. The device according to one of the preceding claims, **characterized in that** the lobes (6, 7) are connected in one piece with one another.

8. The device according to Claim 1, **characterized in that** the slide (10) is lockable stepwise.

9. The device according to one of the preceding claims, **characterized in that** the lung sac (5) is constructed so as to be flat and is interchangeable.

10. The device according to one of the preceding claims, **characterized in that** the lung parameters "resistance" (respiratory tract resistance) and/or "compliance" (lung hardness) and/or "leakage" (leakage losses) are adjustable independently of one another in different steps.

11. The device according to one of the preceding claims, **characterized in that** a continuous leakage simulation is provided.

12. The device according to one of the preceding claims, **characterized in that** through-flow measurement, pressure measurement and/or volume measurement are integrated in the device and the values are able to be displayed by means of display units on the test lung.

## Revendications

1. Dispositif de vérification d'appareils d'anesthésie et respiratoires, comprenant un sac pulmonaire disposé entre deux clapets mobiles entre eux, comprenant une entrée pulmonaire et des moyens de réglage pour régler les paramètres de simulation, sachant qu'au moins un des deux clapets est conçu en tant que languette élastique déformable, **caractérisé en ce que** la longueur élastique des languettes (6, 7) peut être réglée par des moyens auxiliaires, sachant que les moyens auxiliaires sont conçus en tant que poussoirs (10) reliant entre elles les extrémités libres des languettes (6, 7), pouvant être déplacés et fixés dans le sens longitudinal des languettes (6, 7).

2. Dispositif selon la revendication 1, **caractérisé en ce que** les deux clapets sont conçus en tant que languettes élastiques déformables (6, 7).

3. Dispositif selon la revendication 1 ou 2, **caractérisé en ce que** les languettes (6, 7) sont tendues fixement sur une extrémité.

4. Dispositif selon l'une des revendications 1 à 3, **caractérisé en ce qu'**au moins une des languettes (6, 7) est en plastique.

5. Dispositif selon la revendication 4, **caractérisé en ce que** la, respectivement, les languette(s) (6, 7) sont composées de fibres composites armées.

6. Dispositif selon l'une des revendications précédentes, **caractérisé en ce qu'**au moins une des languettes (6, 7) est en acier à ressort.

7. Dispositif selon l'une des revendications précédentes, **caractérisé en ce que** les languettes (6, 7) sont reliées entre elles en une seule pièce.

8. Dispositif selon la revendication 1, **caractérisé en ce que** le poussoir (10) peut être encliqueté progressivement.

9. Dispositif selon l'une des revendications précédentes, **caractérisé en ce que** le sac pulmonaire (5) est conçu plat et peut être changé.

10. Dispositif selon l'une des revendications précédentes, **caractérisé en ce que** les paramètres pulmonaires « resistance » (résistance des voies respiratoires) et/ou « compliance » (conformité) et/ou « leckage » (fuites) peuvent être réglés à différents degrés indépendamment l'un de l'autre.

11. Dispositif selon l'une des revendications précédentes, **caractérisé en ce qu'**une simulation de fuite continue est prévue.

12. Dispositif selon l'une des revendications précédentes, **caractérisé en ce que** la mesure de débit, de pression et/ou de volume est intégrée dans le dispositif et les valeurs peuvent être affichées sur le test de poumon par l'intermédiaire d'unités d'affichage.
